# FASCICULE DE BREVET EUROPEEN

(11) **EP 2 352 783 B1**
(45) Date de publication et mention de la délivrance du brevet: **23.08.2017**
(21) Numéro de dépôt: 09795495.2
(22) Date de dépôt: 23.11.2009
(51) Int. Cl.: C08J 5/04, C08L 77/06, C08L 77/10, B29C 70/06, B29C 70/28, C08G 69/36

(54) **COMPOSITIONS DE POLYAMIDE ET DE RENFORTS BIORESSOURCES**
POLYAMID UND VERSTÄRKUNGSZUSAMMENSETZUNGEN
POLYAMIDE AND BIORESOURCED REINFORCEMENT COMPOSITIONS

(30) Priorité: 21.11.2008 FR 0857931
(43) Date de publication de la demande: 10.08.2011
(73) Titulaire: Arkema France, 92700 Colombes (FR)
(72) Inventeur: BRULE, Benoît, F-27170 Beaumont-le-Roger (FR); BUSSI, Philippe, F-78000 Versailles (FR); HOCHSTETTER, Gilles, F-27300 Bernay (FR); LE, Guillaume, F-14460 Colombelles (FR); RAMFEL, Barbara, F-27170 Barc (FR)
(74) Mandataire: Delprat, Corinne
(86) Numéro de dépôt international: PCT/FR2009/052260
(87) Numéro de publication internationale: WO 2010/058140

(56) Documents cités:
- WO-A-00/50210
- WO-A-00/59989
- WO-A-2007/137378
- FR-A- 2 781 492
- FR-A- 2 884 518
- "ASTM D6852-02, Standard Guide for Determination of Biobased Content, Resources Consumption, and Environmental Profile of Materials and Products (Withdrawn 2011)", ASTM INTERNATIONAL STANDARD, ASTM INTERNATIONAL, US ASTM International, vol. ASTM D6852-02 February 2003 (2003-02), pages 1098-1107, XP009188764, West Conshohocken, PA, USA DOI: 10.1520/D6852-02 Retrieved from the Internet: URL:http://www.astm.org/DATABASE.CART/WITH DRAWN/D6852.htm
- "ASTM D6866-08 Standard Test Methods for Determining the Biobased Content of Solid, Liquid, and Gaseous Samples Using Radiocarbon Analysis", ASTM INTERNATIONAL STANDARD, ASTM INTERNATIONAL, US ASTM International, vol. ASTM D6866-08 September 2008 (2008-09), pages 698-712, XP008172700, West Conshohocken, PA, USA DOI: 10.1520/D6866-08 Retrieved from the Internet: URL:http://www.astm.org/DATABASE.CART/HIST ORICAL/D6866-08.htm

## Description

La présente invention a pour objet une composition à base de polyamide(s) pouvant être ou non en partie bioressourcé(s), au moins un polyamide présentant au moins le motif MXD, ladite composition comprenant des renforts bioressourcés ou naturels. L'invention concerne également la transformation de cette composition en objets ayant de bonnes propriétés mécaniques et permettant de répondre à des cahiers des charges techniques applicatifs tels que l'on peut trouver par exemple dans l'automobile, le bâtiment, le sport et les domaines électriques ou électroniques.

Aujourd'hui, dans le domaine des matériaux à base de matrices thermoplastiques, il n'existe pas de combinaison avec des renforts naturels présentant des propriétés techniques suffisantes pour certaines applications exigeant une bonne rigidité, une bonne tenue thermo-mécanique, une bonne tenue au vieillissement. Par ailleurs, les matrices que l'on souhaiterait associer à ces renforts naturels ne présentent généralement pas une plage de températures de transformation qui soit compatible avec l'incorporation de tels renforts naturels thermosensibles. Il est connu que les constituants majoritaires des renforts naturels, comme la lignine, l'hémicellulose et les pectines, sont particulièrement sensibles thermiquement, d'autres en revanche tels que l'α-cellulose le sont moins.

On entend par renforts naturels, par exemple, des farines de bois, des fibres végétales courtes ou longues (lin, chanvre, kénaf, abaca...), des fibres continues, des mats issus de ces fibres.

Par ailleurs, il y a un intérêt croissant pour les matériaux issus de matières premières bioressourcées en raison notamment de l'épuisement des matières premières d'origine fossile, tout en conservant des propriétés d'usage performantes.

Les renforts bioressourcés ou naturels sont des matériaux qui présentent de plus généralement une densité inférieure à celle des renforts inorganiques, et ils sont moins abrasifs vis-à-vis des outils de transformation par rapport à des renforts inorganiques. Les renforts naturels sont par ailleurs bon marché et consomment moins d'énergie pour leur production en comparaison, par exemple, aux fibres de verre.

En revanche, les renforts bioressourcés ou naturels présentent généralement une mauvaise adhésion vis-à-vis des matrices polymériques telles que les polyamides. Ils doivent être, dans certains cas, traités en surface pour améliorer leur adhésion vis-à-vis de ces matrices par des agents de couplage, des additifs, des traitements type plasma, corona, laser, irradiation γ ou UV, chimiques, mécaniques, thermiques ou autre.

Les polyamides faisant l'objet de cette invention, qui peuvent être partiellement bioressourcés, répondent en particulier à la formule A/MXD.Z avec Z désignant une entité provenant d'un diacide et A, lorsqu'il est présent, désignant une entité qui peut provenir d'un aminoacide, de préférence l'amino-11, d'un lactame, tel que le lactame-12, ou du produit de réaction X.Y d'une diamine X et d'un diacide carboxylique Y. Cette entité X.Y sera de préférence bioressourcée, et correspondra par exemple à l'entité 10.10, 10.12 ou 6.10. L'entité MXD, quant-à-elle, désigne la méta-xylylène diamine ou un mélange de méta-xylylène diamine (MXD) et de para-xylylène diamine (PXD), la méta-xylylène diamine étant de préférence majoritaire dans ledit mélange.

L'utilisation de renforts bioressourcés ou naturels implique de transformer ces compositions à des températures, mesurées dans lesdites compositions à l'état fondu, qui sont modérées (typiquement inférieures à 215°C) et ce, même pour des courts temps de séjour (environ 2 minutes). La matrice thermoplastique à base de polyamide(s) doit donc présenter une plage de températures de transformation compatible avec l'incorporation de renforts naturels thermosensibles afin d'assurer un bon mouillage des fibres et ce, sans les dégrader. Ceci peut être obtenu en choisissant judicieusement les monomères de la matrice à base de polyamide(s) mais aussi par l'addition d'un composé tel que l'acide stéarique ou les sels de lithium, comme décrit dans le document US 2004/0122133.

La présente invention n'est pas limitée aux seuls renforts bioressourcés ou naturels. En plus des renforts naturels, l'utilisation de fibres, tissus minéraux (verre, carbone...) ou de charges (talc, montmorillonite...) peut également être envisagée pour ajuster finement les propriétés, notamment les propriétés mécaniques.

Les compositions de la présente invention peuvent en outre contenir des additifs tels que des agents de couplage, qui peuvent être polymériques, des modifiants chocs, des aides à la mise en oeuvre ("processing aids" en terminologie anglo-saxonne), des stabilisants aux UV et/ou à la chaleur, des ignifugeants tels qu'en particulier Mg(OH)₂, Al(OH)₃ et les phosphinates.

Les matrices de ces compositions présentent une bonne rigidité, typiquement un module de traction de 2GPa au moins après conditionnement.

### Art antérieur

Le document EP 0 272 503 décrit des matrices de type MXD.10 (poly(m-xylylènesébacamide) associées à un polyamide semi-cristallin. Ces matrices peuvent contenir des fibres de verre. L'association d'un deuxième polymère de température de fusion de 20 à 30 °C au-dessus de celle du MXD10 ne permet pas l'association de fibres naturelles au risque d'observer leur dégradation. De plus, les fibres utilisées ne sont pas bioressourcées ou naturelles.

Le document WO 2007/137378 décrit des compositions à base de polyamides (dont le PA6 en particulier) et de fibres naturelles telles que la fibre de curaua. Dans ce document, le caractère bioressourcé n'est apporté que par la fibre naturelle, la matrice étant d'origine fossile. Ce document ne fait pas état de difficultés particulières pour incorporer les fibres naturelles thermosensibles dans le PA6. Par ailleurs, il n'est pas indiqué si la valeur rapportée (5100 MPa) du module de traction d'un mélange PA6-fibres de curaua (proportion 80/20 en poids) est obtenue avant ou après conditionnement du polyamide.

Or, les brochures techniques des producteurs de PA6 indiquent toutes que le module de traction du PA6 varie de manière très importante entre l'état sec (c'est-à-dire au sortir du cycle d'injection) et l'état conditionné (c'est-à-dire après 15 jours passés à 23°C et sous 50% d'humidité relative). Ces brochures techniques indiquent qu'en moyenne le module de traction du PA6 à l'état sec est de l'ordre de 3000 à 3400 MPa, alors qu'il n'est plus que de 900 à 1200 MPa après conditionnement. Pour apprécier les performances mécaniques de compositions à base de PA6 et de renforts naturels dans des conditions d'utilisation, il est donc indispensable de tester des échantillons préalablement conditionnés.

Le brevet US 6,270,883 décrit des compositions à base de PA6 et de fibres cellulosiques de bois, contenant éventuellement des agents de couplage afin d'améliorer les performances mécaniques. Ici encore, la matrice (PA6) est d'origine fossile. Ces compositions PA6-fibres cellulosiques de bois (proportion 70/30 en poids) présentent des modules de traction compris entre 5350 et 5700 MPa en présence de 2% en poids d'agent de couplage et entre 5100 et 5200 MPa sans agent de couplage, la matrice PA6 possédant un module de traction de 2750 MPa. Toutefois, ces performances sont mesurées à l'état sec. Par ailleurs, les fibres cellulosiques de bois conduisant à ces résultats ont été choisies pour leur stabilité thermique plus élevée, puisqu'elles contiennent au moins 95% en poids d'α-cellulose, et donc moins de 5% en poids de composants thermosensibles tels que la lignine ou l'hémicellulose.

Le document US 2004/0122133 décrit des compositions à base de PA6 et de fibres bioressourcées ou naturelles, ainsi qu'un procédé d'obtention de ces compositions, caractérisé en ce qu'un sel de chlorure de lithium (LiCl) est préalablement introduit dans la matrice PA6 afin d'en abaisser substantiellement le point de fusion, passant de 223°C à respectivement 199°C ou 194°C selon la quantité de LiCl ajoutée (respectivement 3,0 et 3,5% en poids). Des fibres naturelles thermosensibles peuvent alors être introduites sans risque de dégradation dans la matrice PA6/LiCI à l'état fondu puisque le polymère peut être transformé à des températures plus basses. Ce procédé présente toutefois l'inconvénient de favoriser encore plus la propension du PA6 à reprendre l'humidité puisque les sels choisis sont hydrophiles. Les compositions selon l'invention ne nécessitent pas d'abaisser le point de fusion de la matrice polyamide.

Les documents JP 2005-060556 et US 2006/0202391 décrivent la combinaison de PLA (polyacide lactique a *priori* bioressourcé) et de fibres de kénaf. Or le PLA est difficile à transformer en présence d'eau, car c'est un polyester aliphatique. Par ailleurs, le PLA est plus sensible à l'eau que les polyamides, ce qui laisse envisager un comportement au vieillissement perfectible.

Le document WO 2008/050568 décrit des compositions à base de PA11 et de fibres naturelles, comme le lin, le chanvre, le bambou ou la soie. Ces compositions sont bioressourcées mais ne conduisent pas à des propriétés mécaniques suffisantes, notamment en terme de module de traction en raison de la présence de PA11.

Le document EP 0 711 324 décrit une composition de polymère biodégradable renforcée par des fibres naturelles. Le polymère biodégradable est l'amidon qui présente des propriétés mécaniques limitées et une grande sensibilité à l'eau limitant donc sa valeur d'usage.

Le document EP 0 960 162 révèle, dans son exemple 9, un procédé d'obtention d'une composition à base de PA11 et contenant 25% en volume de fibres de lin, ce qui correspond à 33% en poids de fibres compte tenu de la densité du PA11 (1,03) et de celle des fibres de lin (1,50). Cette composition se caractérise notamment par un module de traction de 4050 MPa (selon la norme DIN 53455). Il est à noter que, contrairement au PA6, le module de traction du PA11 est moins sensible au
conditionnement. La composition décrite est bioressourcée mais ne conduit pas à des propriétés mécaniques suffisantes, notamment en terme de module de traction.

La Demanderesse a constaté que l'association d'au moins un polyamide, pouvant être partiellement bioressourcé et contenant au moins une entité MXD, avec des renforts bioressourcés ou naturels pouvait permettre l'obtention de matériaux présentant de bonnes propriétés d'usage. Ce polyamide contenant une entité MXD présente par ailleurs une plage de températures de transformation compatible avec l'incorporation de fibres naturelles thermosensibles.

### Résumé de l'invention

L'invention porte sur une composition à base d'au moins un polyamide présentant au moins une entité MXD, MXD désignant la méta-xylylène diamine (MXD) ou un mélange de méta-xylylène diamine (MXD) et de para-xylylène diamine (PXD), à un ou plusieurs renforts bioressourcés, le terme "bioressourcé" s'entendant au sens de la norme ASTM D6852 et, plus préférentiellement, au sens de la norme ASTM D6866.

La norme ASTM D6852 indique la part de produits d'origine naturelle dans la composition tandis que la norme ASTM D6866 vient préciser la méthode et les conditions de mesure du carbone organique renouvelable, c'est-à-dire issu de la biomasse.

Le ou les renforts de la composition selon l'invention sont dits bioressourcé(s), c'est-à-dire qu'ils comportent du carbone organique issu de la biomasse et déterminé selon la norme ASTM D6866. Dans une telle hypothèse, on peut considérer que la composition selon l'invention est elle-même partiellement bioressourcée, ce qui présente un avantage par rapport aux compositions à base de fibres non bioressourcées, par exemple issues de matières premières fossiles.

L'invention concerne également des procédés de fabrication d'un matériau composite à partir d'une telle composition selon les revendications 20, 21, 22, 23, 24 et 25, les procédés d'obtention d'objets à partir des compositions de l'invention ainsi que les objets et utilisation des composition selon les revendications 26 et 28, et objets de l'invention selon la revendication 27. Certes, il est connu du document WO 00/59989 une composition qui contient un polyamide bioressourcé contenant des fibres naturelles. Pour autant, il n'apparaît pas, à la lecture cet art antérieur, évident pour l'homme de l'art de choisir un PA basé sur la MXD et de l'associer à des renforts bioressourcés, pour obtenir un matériau présentant de bonnes propriétés mécaniques et pouvant être transformé à des températures limitant la dégradation des fibres naturelles. Dans ce document, les diamines aliphatiques sont préférées et exemplifiées à la différence de la MXD faisant l'objet de l'invention.

### Description détaillée

En préambule, il est précisé que l'expression "compris(e) entre" utilisée dans la suite de cette description doit s'entendre comme incluant les bornes citées.

Par MXD, on entend la méta-xylylène diamine ou un mélange de méta-xylylène diamine (MXD) et de para-xylylène diamine (PXD). Préférentiellement, diamine MXD sera majoritaire dans le mélange. Cette diamine MXD et/ou PXD est produite communément à partir de ressources d'origine fossile.

Le terme "bioressourcé(s)" s'entend au sens de la norme ASTM D6852 et, plus préférentiellement, au sens de la norme ASTM D6866, comme indiqué ci-dessus.

Par conditionnement, on entend un séjour du matériau pendant 15 jours à 23°C à une humidité relative de 50%.

Par renfort, on entend les fibres courtes ou longues, fibres continues tissées ou non, mat tissé ou non tissé ou encore broyats, farines, permettant l'augmentation du module de traction lorsqu'il est combiné à des matrices polymériques.

La composition selon l'invention comprend au moins un polyamide, ledit polyamide présentant au moins une entité MXD.

Selon une première variante de l'invention, ce polyamide est un homopolyamide qui répond à la formule MXD.Z, l'entité MXD étant telle que définie ci-dessus et l'entité Z étant un diacide carboxylique aliphatique, cycloaliphatique ou aromatique en C₄-C₃₆.

Selon une deuxième variante de l'invention, ce polyamide est un copolyamide répondant à la formule A/MXD.Z, dans laquelle :
- l'entité MXD est telle que définie ci-dessus,
- l'entité Z est un diacide carboxylique aliphatique, cycloaliphatique ou aromatique en C₄-C₃₆, et
- l'entité A est choisie parmi un lactame, un α,ω-aminoacide carboxylique et le produit de la réaction d'un diacide carboxylique aliphatique, cycloaliphatique ou aromatique en C₄-C₃₆ avec une diamine aliphatique, cycloaliphatique, arylaliphatique ou aromatique en C₄-C₃₆.

De préférence, la proportion pondérale du motif MXD.Z, dans le copolyamide de formule A/MXD.Z, représente plus de 50%, de préférence plus de 75% et plus préférentiellement plus de 85%.

Autrement formulé, la proportion molaire du motif MXD.Z, dans le copolyamide de formule A/MXD.Z, représente plus de 25%, de préférence plus de 50% et plus préférentiellement plus de 65%.

Que l'on soit dans le cadre de la première ou de la deuxième variante de l'invention, l'entité Z peut être un diacide carboxylique aliphatique comprenant au moins 6, avantageusement 7 et plus préférentiellement 10, atomes de carbones.

Ainsi, Z peut être un diacide aliphatique de formule HOOC-(CH₂)_{y}-COOH avec (y+2) = 4, 6, 7, 8, 9, 10, 12, 14, 16, 18.

A et/ou Z correspondent à une entité de préférence bioressourcée.

A, lorsqu'il est présent, peut être obtenu à partir d'un monomère lactame (notamment caprolactame ou lauryllactame), un α,ω-aminoacide carboxylique (tel que l'acide 6-aminohexanoique, l'acide 10-aminodécanoïque, l'acide 11-aminoundécanoïque ou encore l'acide 12-aminododécanoïque) ou le produit de réaction entre un diacide carboxylique et une diamine.

Sont en particulier susceptibles d'être envisagés :
- les diamines aliphatiques, de préférence linéaires, saturées ou non, choisies par exemple parmi la butanediamine, la pentanediamine, l'hexanediamine, l'heptanediamine, la nonanediamine, la décanediamine, l'undécanediamine, la dodécanediamine, la tridécanediamine, la tétradécanediamine, l'hexadéca-nediamine, l'octadécanediamine, l'octadécènediamine, l'eicosanediamine, la docosanediamine et les diamines obtenues à partir d'acides gras,
- les diamines aromatiques ou arylaliphatiques, telles que par exemple la MXD, et la PXD (para-xylylène diamine),
- les diamines cycloaliphatiques telles que, par exemple, l'isophorone diamine, la pipérazine, la 1,3-bisaminomethylcyclohexane, la bis(méthylaminocyclo-hexyl)méthane (BMACM),
- les diacides aliphatiques, de préférence linéaires, saturés ou non, choisis par exemple parmi l'acide succinique, l'acide adipique, l'acide heptanedioïque, l'acide azélaïque, l'acide sébacique, l'acide undécanedioïque, l'acide dodécanedioïque, l'acide brassylique, l'acide tétradécanedioïque, l'acide hexadécanedioïque, l'acide octadécanoïque, l'acide octadécènoïque, l'acide eicosanedioïque, l'acide docosanedioïque et les dimères d'acides gras contenant 36 carbones,
- les diacides aromatiques ou arylaliphatiques, tels que par exemple l'acide isophtalique, l'acide téréphtalique, l'acide 2,6-naphtalènedicarboxylique (NDCA), l'acide furane dicarboxylique,
- les diacides cycloaliphatiques, tels que par exemple l'acide 1,4-cyclohexanedicarboxylique (CHDA).

Lorsque le polyamide répond à la formule A/MXD.Z, l'entité A peut être un lactame ou un α,ω-aminoacide carboxylique comprenant au moins 6, et plus préférentiellement au moins 10, atomes de carbones.

Avantageusement, l'entité A est choisie parmi le caprolactame, le lactame 12, l'acide 11-aminoundécanoïque et l'acide 12-aminododécanoïque.

Dans le cas où l'entité A est le produit de condensation d'une diamine avec un diacide carboxylique, ladite diamine est une diamine aromatique, de préférence la méta-xylylène diamine ou un mélange de méta-xylylène diamine et de para-xylylène diamine.

Les choix de A et Z sont faits de préférence de telle sorte que :
- A et/ou Z sont d'origine partiellement ou totalement bioressourcés,
- la température de fusion du (co)polyamide est inférieure ou égale à 215°C (mesuré par DSC - rampe de 20°C/min - selon la norme ISO 11357-3 (1999)),
- le module de traction du (co)polyamide est supérieur ou égal à 2000 MPa (mesuré selon la norme ISO 527 1 BA sur échantillons conditionnés).

De préférence, on privilégiera les polyamides suivants : MXD.Z avec Z étant l'acide subérique, l'acide azélaïque, l'acide sébacique, l'acide dodécanedioïque ou l'acide tétradécanedioïque. De préférence encore, Z est l'acide sébacique. L'acide sébacique est communément obtenu à partir de l'huile de ricin, qui est obtenu à partir de la plante du même nom.

De préférence, on privilégiera les copolyamides suivants :
- A/MXD.Z avec A étant l'acide 11-aminoundécanoïque ou l'acide 10-amino-decanoïque, Z étant l'acide adipique, l'acide sébacique ou l'acide dodécanedioïque. De préférence encore, Z est l'acide adipique et A est l'acide 11-aminoundécanoique. L'acide 11-aminoundécanoïque est communément obtenu à partir de l'huile de ricin, qui est obtenu à partir de la plante du même nom.
- A/MXD.Z avec A étant le caprolactame ou le lactame 12, Z étant l'acide adipique, l'acide sébacique ou l'acide dodécanedioïque. De préférence encore, Z est l'acide adipique.
- A/MXD.Z avec A étant le produit de condensation d'un diacide carboxylique et une diamine, Z étant l'acide adipique, l'acide sébacique ou l'acide dodécanedioïque. De préférence, le diacide carboxylique de A est choisi parmi l'acide adipique, l'acide sébacique, l'acide dodécanedioïque, l'acide isophtalique et l'acide téréphtalique. De préférence, la diamine est choisie parmi l'hexaméthylène diamine, la décanediamine, la dodécanediamine et la MXD. La décanediamine est communément obtenue par amination puis hydrogénation de l'acide sébacique, lui-même communément obtenu à partir de l'huile de ricin.

Lorsque cela peut s'avérer nécessaire, il n'est pas exclu de mélanger le polyamide basé sur la MXD avec un autre polyamide ou copolyamide.

Ainsi, la composition selon l'invention peut en outre comprendre au moins un second polyamide, ce dernier pouvant être un homopolyamide ou un copolyamide.

La proportion en poids de cet autre polyamide ou copolyamide (par rapport à l'ensemble des polyamides présents dans la composition) est inférieure à 50%, de préférence inférieure à 25%, de préférence encore inférieure à 15%.

Le premier et/ou second polyamide(s) de la composition peut(vent) être, en tout ou partie, bioressourcé(s), c'est-à-dire comporter du carbone organique issu de la biomasse et déterminé selon la norme ASTM D6866. Ainsi, on renforce encore le caractère bioressourcé de la composition dans son ensemble.

Le renfort bioressourcé de la composition selon l'invention comprend au moins un élément choisi parmi les fibres ou farines végétales, les fibres animales, les polymères bioressourcés, les fibres de carbone et les nanotubes de carbones bioressourcés, le terme le terme "bioressourcé" s'entendant toujours au sens de la norme ASTM D6852 et, plus préférentiellement, au sens de la norme ASTM D6866.

Un mélange de deux, ou plus, renforts d'une même catégorie ou de catégories distinctes est bien évidemment envisageable dans le cadre de la présente invention.

Les renforts bioressourcés concernés par l'invention peuvent être :
- les fibres ou farines végétales qui comprennent les fibres ou farines provenant des poils séminaux de graines (coton, kapok), les fibres ou farines libériennes extraites de tiges de plantes (lin, chanvre, kénaf, jute, ramie...), les fibres ou farines dures extraites de feuilles (sisal, abaca...), de troncs (chanvre de Manille, bois en général), d'enveloppes de fruits (noix de coco...),
- les fibres animales qui proviennent des poils, tels que la toison animale, et des sécrétions telles que la soie,
- les fibres de carbone ou nanotubes de carbone issus de matières premières bioressourcées,
- les fibres polymères issues de matières bioressourcées,
- les broyats d'écorces ou de pépins (noisettes, noix..), de carapaces animales (crabes...), de graines (riz...).

De préférence sont concernées par l'invention les fibres végétales et plus particulièrement les fibres de lin, de chanvre, de sisal, de kénaf, d'abaca ou de jute.

Préférentiellement, le renfort bioressourcé, qu'il soit constitué d'un seul ou de plusieurs des éléments détaillés ci-dessus, représente de 5 à 50%, de préférence de 15 et 40% en poids du poids total de la composition.

Dans une version particulière de l'invention, lorsque le renfort bioressourcé est constitué par des nanotubes d'origine bioressourcée, les plages pondérales pourront être diminuées de manière à ce que ce renfort représente de 2 à 20% en poids du poids total de la composition selon l'invention.

Dans une version avantageuse de l'invention, le renfort bioressourcé se présente sous la forme d'un broyat, d'une farine, d'une fibre courte, d'une fibre longue, de fibres continues tissées, de fibres continues non tissées, de mat de fibres tissées ou non tissées.

Sont concernés également par l'invention, les fibres bioressourcées continues tissées ou non, les tissus bioressourcés (mat tissés ou non tissés obtenus à l'aide de ces fibres ou combinaisons de ces fibres).

Lorsque cela sera nécessaire, il n'est pas exclu de rajouter des renforts non bioressourcés telles les fibres de carbone ou nanotubes de carbone d'origine fossile, fibres de verre... en plus du renfort bioressourcé, ou encore des charges telles que talc, craie, mica, kaolin, montmorillonite.

Ainsi, la composition selon l'invention peut comprendre en outre au moins un deuxième renfort qui n'est pas bioressourcé au sens de la norme ASTM D6852 et, plus préférentiellement, au sens de la norme ASTM D6866, ledit deuxième renfort pouvant être une fibre de carbone, des nanotubes de carbone ou des fibres de verre.

Préférentiellement, la proportion pondérale de l'ensemble des renforts, à savoir du ou des renforts bioressourcés et, le cas échéant, du ou des renforts non bioressourcés, est comprise entre 5 et 80%, avantageusement entre 10 et 70%, de préférence entre 15 et 50% et, de manière encore plus préférée entre 15 et 40%, du poids total de la composition.

De manière avantageuse, le rapport massique (renfort(s) bioressourcé(s)) sur (renfort(s) non bioressourcé(s)) est supérieur à 0.3, de préférence supérieur ou égal à 1, et plus particulièrement supérieur ou égal à 3.

De préférence, ces autres renforts non bioressourcés représentent moins de 30% et plus particulièrement moins de 20% en poids du poids total de la composition selon l'invention.

Il est également parfois nécessaire de modifier les renforts, en particulier les fibres, de la composition selon l'invention par un traitement adéquat permettant d'améliorer l'adhésion de ces renforts avec la matrice.

Ainsi, le renfort bioressourcé et, le cas échéant, le deuxième renfort non bioressourcé peuvent subir un traitement visant à améliorer leur adhésion vis à vis des polyamides, ledit traitement étant choisi parmi :
- un traitement chimique,
- un pré-enrobage du renfort par un agent de couplage polymérique,
- un traitement plasma,
- un traitement mécanique ou thermomécanique,
- un traitement laser,
- une irradiation γ ou UV.

Ainsi, on pourra considérer les traitements chimiques tels que l'utilisation des aminosilanes, pré-enrobage des fibres par un agent de couplage polymérique, traitement plasma, laser, irradiation γ ou UV ou autre traitement chimique ou mécanique permettant d'améliorer l'adhésion de ces renforts, notamment sous forme de fibres, avec la matrice. Dans certains cas, un traitement basique (soude), suivi ou non de lavage à l'eau, peut être utilisé afin d'éliminer certains composés de surface et permettant ainsi un meilleur couplage.

Par ailleurs, les compositions de la présente invention pourront en outre contenir un ou plusieurs additifs tels qu'agents de couplage, qui peuvent être polymériques, modifiants chocs, processing-aids, stabilisants aux UV, stabilisants à la chaleur, ignifugeants tels qu'en particulier Mg(OH)₂, Al(OH)₃ et les phosphinates. Les agents de couplage visés ici sont destinés à améliorer l'adhésion des renforts avec le(s) polyamide(s).

Ces additifs représentent généralement moins de 50% en poids, de préférence moins de 20% en poids, du poids total de la composition.

Pour les agents de couplage, modifiants chocs, processing-aids, stabilisants aux UV et stabilisants à la chaleur, la teneur est en particulier inférieure à 20% et de préférence inférieure à 10% en poids du poids total de la composition.

Enfin, la composition selon l'invention peut en outre comprendre des charges telles que talc, montmorillonite, craie, mica et kaolin, de préférence dans une proportion pondérale pouvant représenter moins de 30%, et plus particulièrement moins de 20%, du poids total de la composition.

Les compositions à base de polyamides et de renforts bioressourcés selon l'invention se caractérisent par un module de traction à l'état conditionné (mesuré selon la norme ISO 527 1BA sur échantillons conditionnés 15 jours à 23°C et à 50% d'humidité relative) de préférence supérieur à 3500 MPa, de préférence encore supérieur à 5000 MPa.

Ces compositions peuvent être utilisées pour la fabrication d'un matériau composite à partir d'une composition comprenant un(des) renfort(s) bioressourcé(s) sous forme de fibres courtes, ledit procédé comprenant les étapes suivantes :
A- mélangeage du renfort bioressourcé et du(des) polyamide(s) dans une extrudeuse ou un co-malaxeur entre 180 et 240°C, notamment entre 200 et 240°C, par exemple de 215°C,
B- extrusion du jonc,
C- granulation du jonc.

Les objets de l'invention sont obtenus :
- pour un renfort bioressourcé sous forme de fibres courtes, par injection à 215°C (ou injection compression) de granulés de fibres courtes, le granulé étant obtenu par mélangeage ("compounding" en terminologie anglosaxonne) sur extrudeuse ou co-malaxeur, entre 180 et 240°C, notamment entre 200 et 240 °C, par exemple à 215 °C, des compositions de l'invention et découpe du jonc obtenu.
- pour un renfort bioressourcé sous forme de fibres longues, par injection à 215 °C (ou injection compression) de granulés de fibres longues, le granulé étant obtenu par imprégnation de faisceaux de fibres continues dans le polyamide fondu entre 180 et 240°C, notamment entre 200 et 240°C, par exemple à 215°C, au moyen d'une extrudeuse à tête d'équerre puis découpe du jonc obtenu. Les fibres longues sous forme de mèche ("roving" en terminologie anglo-saxonne) peuvent être aussi incorporées directement lors de l'injection.

- pour un renfort bioressourcé sous forme de mats tissés ou non tissés, obtention de plaques stratifiées par pressage à chaud entre 180 et 240°C, notamment entre 200 et 240°C, par exemple à 215°C, d'un empilement, en alternance, de mats de fibres tissées ou non tissées et de films du(des) polyamide(s) ou laminage de mats de fibres tissées ou non tissées sur un film de polyamide(s).
- pour un renfort bioressourcé sous forme de faisceaux de fibres, ou un mat de fibres (tissées ou non tissées), réalisation de pré-imprégnés obtenus, soit par imprégnation (gainage) des fibres dans un bain de polyamide fondu entre 180 et 240°C, notamment entre 200°C et 240°C, par exemple à 215°C, (dans le cas des faisceaux de fibres, avec une extrudeuse tête d'équerre), soit par imprégnation dans un lit fluidisé (c'est-à-dire poudrage par voie électrostatique puis fusion de la poudre de polyamide(s) dans une étuve portée entre 180 et 240°C, notamment entre 200 et 240°C (par exemple, à 215°C), soit par poudrage puis gainage en voie fondue entre 180 et 240°C, notamment entre 200 et 240°C, par exemple à 215°C, puis réalisation du composite à partir des pré-imprégnés, soit par enroulement filamentaire (enroulement sur un mandrin des faisceaux de fibres), pour la réalisation des corps creux par exemple, ou encore par pressage et thermoformage de plaques élaborées à partir des mats de fibres pré-imprégnées, pour la fabrication de coques.
- enfin, pour un renfort bioressourcé sous forme de faisceaux de fibres, réalisation du composite par pultrusion pour réaliser des profilés (tirage des faisceaux de fibres et imprégnation en continu du(des) polyamide(s) fondu(s) ou dans un lit fluidisé et passage au travers d'un conformateur chauffant donnant la forme de la section du profilé), porté entre 180 et 240°C, notamment entre 200 et 240°C et, par exemple, à 215°C.

Sauf indication contraire, les plages de températures qui viennent d'être citées sont celles mesurées dans la composition à l'état fondu.

Les objets obtenus à partir des compositions selon l'invention peuvent être des pièces destinées :
- au secteur non limité de l'automobile telles que couvre-culasse, collecteur d'admission, boîtier de radiateur,
- aux secteurs du bâtiment,
- aux secteurs électriques ou électroniques tels que des boîtiers, coques ou coffrets,
- aux secteurs du sport tels que, par exemple, élément de chaussures.

### Exemples

### Exemples 1 et 2 : MXD.10 non renforcé

Des haltères ISO 527 1 BA de polyamide MXD.10 synthétisé à partir de méta-xylylène diamine et d'acide sébacique ayant un indice de fluidité à la fusion ("melt flow index" ou MFI en terminologie anglo-saxonne) de 20g/10min à 275°C sous 2,16kg sont moulés par injection à 210°C dans un moule maintenu à 30°C ou 120°C avec une presse à injecter de 60 tonnes. Les granulés de polyamide MXD.10 ont été préalablement séchés à 60°C pendant 12 heures dans une étuve sous vide.

La température de fusion est mesurée par DSC selon la norme ISO11357.

Les haltères de MXD.10, mais également de PA6 et de PA11, sont conditionnés pendant 15 jours à 23°C à une humidité relative de 50%. Les propriétés en traction sont obtenues avec le protocole décrit dans la norme ISO527 1 BA.

Dans le Tableau 1 ci-après, les modules de traction sont comparés entre du MXD.10 injecté à 210°C, du polyamide-6 (PA6, Ultramid® 8202 commercialisé par BASF) injecté à 260°C et du polyamide-11 (PA11, Rilsan® BMNO TLD commercialisé par Arkema) injecté à 240°C.

**Tableau 1**

| | Exemples | | comparatifs | |
|---|---|---|---|---|
| | 1 | 2 | A⁽¹⁾ | B⁽²⁾ |
| Polyamide | MXD.10 | MXD.10 | PA6 | PA11 |
| T injection (°C) | 210 | 210 | 260 | 220-240 |
| T moule (°C) | 120-125 | 30-35 | 80 | 30-60 |
| T fusion (°C) | 193 | 193 | 220 | 187-191 |
| Module de traction (MPa) Non conditionné | 3700 | 2700 | 2800 | 1260 |
| Module de traction (MPa) Conditionné | 3600 | 2550 | 970 | 1070 |
| Densité (g/cm³) ISO R1183 D | 1.12 | 1.12 | 1.14 | 1.03 |

Il est important de noter que le PA MXD.10 est beaucoup moins sensible au conditionnement (reprise en eau plus faible) que le PA6 puisque les modules de traction diminuent de 2 à 6% pour le PA MXD.10 alors que pour le PA6, le module diminue de 66%. Cet avantage est important surtout quand il s'agit d'introduire des renforts naturels non traités qui augmentent généralement la reprise en eau du compound.

D'autre part, le PA MXD.10 peut être injecté à 210°C alors que le polyamide-6 quand à lui est injecté préférentiellement à 260°C et le polyamide-11 à 240°C.

Il ressort de cette comparaison qu'il est nécessaire de prendre en compte des propriétés, notamment mécaniques, mesurées sur des échantillons qui ont été conditionnés.

### Exemples 3 et comparatifs C à F : polyamides avec 15% en poids de renforts

Différentes compositions comprenant 85% en poids d'un polyamide et 15% en poids de renforts ont été préparées à partir des produits suivants :
Les polyamides mis en oeuvre sont les suivants :
   - le polyamide MXD.10 (Tf de 193°C) est identique à celui des exemples 1 et 2 ;
   - le polyamide 6 (noté PA6, Tf de 220°C) correspond au grade commercial ULTRAMID® B3 de la société BASF ;
   - le polyamide 11 (PA11, Tf de 187-191°C) correspond au grade RILSAN® BMNO de la société ARKEMA FRANCE ;

Les températures de fusion Tf mentionnées ci-dessus ont été mesurées par DSC selon la norme ISO 11357.

Le renfort non bioressourcé est constitué par des fibres de verre ensimées afin d'assurer le couplage avec la matrice. Ces fibres de verre sont désignées "FV" dans le Tableau 2 ci-dessous.

Les renforts bioressourcés testés sont :
- des microfibrilles de cellulose (désignées "cellulose" dans le Tableau 2 ci-dessous) commercialisées par la société Rettenmaier sous la marque Arbocel®. Le grade choisi dans cet exemple est le BWW40 constitué à plus de 99% en poids de cellulose ;
- des fibres de lin (désignées "lin" dans le Tableau 2 ci-dessous) commercialisées par la société Dehondt sous la marque Lïntex®. Le grade choisi dans cet exemple est le M10F.

Avant mélange, ces renforts bioressourcés sont préalablement séchés entre 100°C et 110°C dans une étuve pendant 12 heures sous vide. De même, les granulés de PA MXD.10, PA6 et PA11 sont préalablement séchés entre 60°C et 80°C pendant 12 heures dans une étuve sous vide.

Les mélanges de polyamides et de renforts bioressourcés tels que détaillés dans le Tableau 2 ci-dessous sont réalisés dans une micro-extrudeuse Explore® double-vis co-rotative de la société DSM. Cet outil est constitué d'une chambre de mélange thermo-régulée munie de 2 vis co-rotatives. L'introduction des produits s'effectue à l'aide d'un piston coulissant. La chambre de mélange est équipée d'un canal de re-circulation et d'une filière pouvant être fermée, ce qui permet de faire re-circuler la matière pendant un temps fixé. La filière est ensuite ouverte et la matière est collectée dans une enceinte également régulée thermiquement (pistolet chauffant). Ce pistolet chauffant est ensuite connecté à une micro-injecteuse qui permet de mouler des haltères normés du type ISO 527 1BA en appliquant un cycle de pressions variables et des durées de moulage contrôlées, comme ce qui est fait communément avec une presse à injecter. Le moule est aussi thermo-régulé, ce qui permet de mouler à des températures variables.

Pour les exemples décrits ci-dessous, les mélanges sont réalisés :
- à une température comprise entre 190°C et 220°C mesurée dans la matière fondue pour les mélanges comportant du PA MXD.10, ou du PA 11, et des renforts naturels, et
- à une température de 230°C mesurée dans la matière fondue pour les mélanges comportant du PA 6 et des renforts naturels.

Les renforts bioressourcés et les polyamides sont introduits dans la chambre de mélange thermo-régulée à l'aide du piston coulissant. Les mélanges sont réalisés avec une vitesse de vis réglée à 100 tours par minute. Le temps de re-circulation choisi est de 90 secondes. Lors de l'injection, le pistolet chauffant est thermo-régulé à une température similaire à la température de mélange et le moule entre 40°C et 80°C. La pression maximale du cycle est de 16 bars. Les durées de maintien dans le moule sont comprises entre 6 et 20 secondes.

Les haltères obtenus à partir de différentes compositions de l'exemple 3 conforme à l'invention et des exemples comparatifs E et F sont ensuite conditionnés pendant 15 jours à 23°C à une humidité relative de 50%.

Les propriétés mécaniques de ces haltères après conditionnement, en particulier les valeurs des modules de traction, sont évaluées en respectant le protocole décrit dans la norme ISO 527 1 BA. Les valeurs de module de traction (MPa), celles de l'écart-type ainsi que celles de densité sont présentées dans le Tableau 2 ci-dessous.

Dans ce Tableau 2 sont également reportées les valeurs des modules de traction (selon la norme ISO 527 1BA) et de densité relevées :
- pour l'exemple comparatif C : sur la fiche technique du grade commercial ULTRAMID® B3EG3 (PA6 + fibres de verre) de la société BASF,
- pour l'exemple comparatif D : sur une fiche technique d'un mélange de PA11 et de fibres de verre fabriqué par la société ARKEMA France.

**Tableau 2**

| | Exemple | Exemples comparatifs | | | |
|---|---|---|---|---|---|
| | 3 | C | D | E | F |
| Polyamide (85% en poids) | MXD.10 | PA6 | PA11 | PA11 | PA6 |
| Renforts (15% en poids) | cellulose | FV | FV | lin | lin |
| Module de traction (MPa) | 4000 | 3500 | 3000 | 2000 | 1900 |
| +/- écart-type | +/-500 | - | - | +/-500 | +/-250 |
| Densité | 1.16 | 1.24 | 1.12 | 1.08 | 1.16 |

On observe que le module de traction de l'exemple 3 atteint une valeur au moins égale, voire supérieure, à celles d'haltères conditionnés formés à partir de PA6 et de fibres de verre (exemple comparatif C) et ce, pour des densités bien moindres.

### Exemples 5 et comparatifs G à K : polyamides avec 30% en poids de renforts

Différentes compositions comprenant 70% en poids d'un polyamide et 30% en poids de renforts ont été préparées à partir des produits indiqués ci-après.

Les polyamides mis en oeuvre sont les suivants :
- le polyamide MXD.10 (Tf de 193°C) est identique à celui des exemples 1 à 3,
- le polyamide 6 (PA6, Tf de 220°C) correspond au grade commercial ULTRAMID® B36 de la société BASF,
- le polyamide 11 (PA11, Tf de 187-191°C) correspond au grade commercial Rilsan® BMNO fabriqué par la société ARKEMA FRANCE.

Les températures de fusion Tf mentionnées ci-dessus ont été mesurées par DSC selon la norme ISO 11357.

Le renfort non bioressourcé est constitué par les mêmes fibres de verre ensimées mentionnées pour les exemples comparatifs C et D décrits ci-dessus. Ces fibres de verre sont désignées "FV" dans le Tableau 3 ci-dessous.

Les fibres de lin (désignées par "fin" dans le Tableau 3 ci-dessous) sont les mêmes que celles déjà mises en oeuvre dans les exemples comparatifs E et F.

Le protocole de préparation des compositions et de fabrication des haltères décrit pour les exemples 3 et comparatifs E et F est reproduit mais avec 30% en poids de renforts bioressourcés dans le mélange sec avant introduction dans la micro-extrudeuse, les granulés de polyamides ainsi que les renforts ayant été séchés dans les même conditions que celles décrites précédemment.

Les haltères obtenus à partir de différentes compositions de l'exemple 5 conforme à l'invention et des exemples comparatifs H et K sont ensuite conditionnés pendant 15 jours à 23°C à une humidité relative de 50%.

Les propriétés mécaniques de ces haltères après conditionnement, en particulier les valeurs des modules de traction, sont évaluées en respectant le protocole décrit dans la norme ISO 527 1BA. Les valeurs de module de traction (MPa) et de densité sont présentées dans le Tableau 3 ci-dessous.

Dans ce Tableau 3 sont également reportées les valeurs des modules de traction (selon la norme ISO 527 1BA, sauf dans le cas de l'exemple comparatif G) et de densité relevées :
- pour l'exemple comparatif G : dans l'exemple (9) du document EP 0 960 162 (étant précisé que la mesure du module de traction est donnée selon la norme DIN 53455),
- pour l'exemple comparatif I : sur la fiche technique du grade Rilsan® BZM30 O TL (PA11 + fibres de verre) commercialisé par la société ARKEMA FRANCE ;
- pour l'exemple comparatif J : sur la fiche technique du grade commercial ULTRAMID® B3EG3 (PA6 + fibres de verre) de la société BASF.

**Tableau 3**

| | Exemple | Exemples comparatifs | | | | |
|---|---|---|---|---|---|---|
| | 5 | G | H | I | J | K |
| Polyamide (70% en poids) | MXD.10 | PA11 | PA11 | PA11 | PA6 | PA6 |
| Renforts (30% en poids) | lin | lin long | lin | FV | FV | lin |
| Module de traction (MPa) | 6000 | 4050 | 3500 | 5300 | 6200 | 3300 |
| +/- écart-type | +/-500 | | +/-500 | | | +/-500 |
| Densité | 1.20 | - | 1.13 | 1.26 | 1.37 | 1.22 |

On observe que le module de traction de l'exemple 5 atteint une valeur comparable à celles d'haltères conditionnés et formés à partir de PA6 et de fibres de verre (exemple comparatif J), qui sont connus comme particulièrement satisfaisants en termes de module et ce, pour une densité bien moindre.

Il est bien évidemment possible d'adapter le choix des fibres bioressourcées aux propriétés mécaniques, notamment de module de traction et de densité, recherchées.

A nature et quantité de renforts bioressourcés comparables, les compositions selon l'invention permettent d'obtenir un matériau nettement plus performant en termes de propriétés mécaniques qu'un matériau à base de PA11 ou de PA 6. On se réfèrera en particulier aux exemples 5 et comparatif H, dans le cas du PA11, et aux exemples 5 et comparatif K, dans le cas du PA6.

Dans le cas d'une composition à base de PA11, ce constat reste toujours valable, même si les fibres bioressourcées de lin sont remplacées par une quantité pondérale équivalente de fibres de verre (voir exemples 5 et comparatif I).

## Revendications

1. Composition à base d'au moins un polyamide présentant au moins une entité MXD, MXD désignant la méta-xylylène diamine ou un mélange de méta-xylylène diamine et de para-xylylène diamine, et d'un renfort bioressourcé au sens de la norme ASTM D6852.

2. Composition selon la revendication 1, **caractérisée en ce que** le polyamide répond à la formule MXD.Z, l'entité Z étant un diacide carboxylique aliphatique, cycloaliphatique ou aromatique en C₄-C₃₆.

3. Composition selon la revendication 1, **caractérisée en ce que** le polyamide est un copolyamide répondant à la formule A/MXD.Z, l'entité Z étant un diacide carboxylique aliphatique, cycloaliphatique ou aromatique en C₄-C₃₆ et l'entité A étant choisie parmi un lactame, un α,ω-aminoacide carboxylique et le produit de la réaction d'un diacide carboxylique aliphatique, cycloaliphatique ou aromatique en C₄-C₃₆ avec une diamine aliphatique, cycloaliphatique, arylaliphatique ou aromatique en C₄-C₃₆.

4. Composition selon la revendication 2 ou 3, **caractérisée en ce que** l'entité Z est un diacide carboxylique aliphatique comprenant au moins 6, avantageusement 7 et plus préférentiellement 10, atomes de carbones.

5. Composition selon la revendication 3 ou 4, **caractérisée en ce que** l'entité A est un lactame ou un α,ω-aminoacide carboxylique comprenant au moins 6, et plus préférentiellement avec au moins 10, atomes de carbones.

6. Composition selon la revendication 5, **caractérisée en ce que** l'entité A est choisie parmi le caprolactame, le lactame 12, l'acide 11-aminoundécanoïque et l'acide 12-aminododécanoïque.

7. Composition selon la revendication 3 ou 4, **caractérisée en ce que**, l'entité A étant le produit de condensation d'une diamine avec un diacide carboxylique, ladite diamine est une diamine aromatique, de préférence la méta-xylylène diamine ou un mélange de méta-xylylène diamine et de para-xylylène diamine.

8. Composition selon l'une quelconque des revendications 3 à 7, **caractérisée en ce que** la proportion molaire du motif MXD.Z, dans le copolyamide de formule A/MXD.Z, représente plus de 25%, de préférence plus de 50% et plus préférentiellement plus de 65%.

9. Composition selon l'une quelconque des revendications 1 à 8, **caractérisée en ce que** le renfort bioressourcé comprend au moins un élément choisi parmi les fibres végétales, les fibres animales, les polymères bioressourcés, les fibres de carbone et les nanotubes de carbones bioressourcés.

10. Composition selon la revendication 9, **caractérisée en ce que** la fibre végétale est choisie parmi le lin, le chanvre, le sisal, le kénaf, l'abaca et le jute.

11. Composition selon l'une quelconque des revendications 1 à 10, **caractérisée en ce que** le renfort bioressourcé se présente sous la forme d'un broyat, d'une farine, d'une fibre courte, d'une fibre longue, de fibres continues tissées, de fibres continues non tissées, de mat de fibres tissées ou non tissées.

12. Composition selon l'une quelconque des revendications 1 à 11, **caractérisée en ce qu'**elle comprend en outre au moins un deuxième renfort qui n'est pas bioressourcé, ledit deuxième renfort pouvant être une fibre de carbone, des nanotubes de carbone ou des fibres de verre.

13. Composition selon la revendication 12, **caractérisée en ce que** le rapport massique (renfort bioressourcé) sur (deuxième renfort non bioressourcé) est supérieur à 0.3, de préférence supérieur ou égal à 1, et plus particulièrement supérieur ou égal à 3.

14. Composition selon l'une quelconque des revendications 1 à 13, **caractérisée en ce que** la proportion pondérale de renfort bioressourcé et, le cas échéant, de deuxième renfort non bioressourcé, est comprise entre 5 et 80%, avantageusement entre 10 et 70%, de préférence entre 15 et 50% et, de manière encore plus préférée, entre 15 et 40%, du poids total de la composition.

15. Composition selon l'une quelconque des revendications 1 à 14, **caractérisée en ce qu'**elle comprend en outre au moins un second polyamide.

16. Composition selon la revendication 15, **caractérisée en ce que** la proportion pondérale du second polyamide représente moins de 50%, de préférence moins de 25%, et plus particulièrement moins de 15%, de l'ensemble des polyamides.

17. Composition selon l'une quelconque des revendications 1 à 16, **caractérisée en ce qu'**elle comprend en outre au moins un additif choisi parmi les modifiants chocs, les processing-aids, les stabilisants aux UV, les stabilisants à la chaleur, les ignifugeants, de préférence dans une proportion pondérale représentant moins de 50%, avantageusement moins de 20%, du poids total de la composition.

18. Composition selon l'une quelconque des revendications 1 à 17, **caractérisée en ce qu'**elle comprend en outre des charges telles que talc, montmorillonite, craie, mica et kaolin, de préférence dans une proportion pondérale représentant moins de 30%, et plus particulièrement moins de 20%, du poids total de la composition.

19. Composition selon l'une quelconque des revendications 1 à 18, **caractérisée en ce que** le renfort bioressourcé et, le cas échéant, le deuxième renfort non bioressourcé subissent un traitement visant à améliorer leur adhésion vis à vis des polyamides, ledit traitement étant choisi parmi :
- un traitement chimique,
- un pré-enrobage du renfort par un agent de couplage polymérique,
- un traitement plasma,
- un traitement mécanique ou thermomécanique,
- un traitement laser,
- une irradiation γ ou UV.

20. Procédé de fabrication d'un matériau composite à partir d'une composition comprenant un renfort bioressourcé sous forme de fibres courtes selon l'une quelconque des revendications 11 à 19, ledit procédé comprenant les étapes :
A- mélangeage du renfort bioressourcé et du(des) polyamide(s) dans une extrudeuse ou un co-malaxeur, entre 180 et 240°C,
B- extrusion du jonc,
C- granulation du jonc.

21. Procédé de fabrication d'un matériau composite à partir d'une composition comprenant un renfort bioressourcé sous forme de fibres longues selon l'une quelconque des revendications 11 à 19, ledit procédé comprenant les étapes :
A- imprégnation du renfort bioressourcé dans le(s) polyamide(s) fondu(s) entre 180 et 240°C au moyen d'une extrudeuse à tête d'équerre,
B- extrusion du jonc,
C- granulation du jonc.

22. Procédé de fabrication d'un matériau composite à partir d'une composition comprenant un renfort bioressourcé sous forme de fibres, tissées ou non tissées, selon l'une quelconque des revendications 11 à 19, ledit procédé comprenant les étapes :
A- empilement, en alternance, du renfort bioressourcé et de films du(des) polyamide(s) ou laminage de multicouches du renfort bioressourcé alternées par un film de polyamide(s).
B- pressage à chaud entre 180 et 240°C.

23. Procédé de fabrication d'un matériau composite à partir d'une composition comprenant un renfort bioressourcé sous forme de fibres continues selon l'une quelconque des revendications 11 à 19, ledit procédé comprenant les étapes :
A- pré-imprégnation du renfort bioressourcé dans un lit fluidisé de polyamide(s) par voie électrostatique puis chauffage en étuve portée entre 200°C et 240 °C, ou dans le(s) polyamide(s) fondu(s),
B- enroulement filamentaire,
C- chauffage en étuve portée entre 180°C et 240 °C

24. Procédé de fabrication d'un matériau composite à partir d'une composition comprenant un renfort bioressourcé sous forme de fibres, tissées ou non tissées, selon l'une quelconque des revendications 11 à 19, ledit procédé comprenant les étapes :
A- pré-impregnation du renfort bioressourcé,
B- fabrication de plaques par pressage à chaud entre 180 et 240°C.

25. Procédé de fabrication d'un matériau composite à partir d'une composition comprenant un renfort bioressourcé sous forme de fibres continues selon l'une quelconque des revendications 11 à 19 pour réaliser des profilés par pultrusion, ledit procédé comprenant les étapes :
A- tirage du renfort bioressourcé et imprégnation en continu du(des) polyamide(s) fondu(s) ou dans un lit fluidisé de poudre de polyamide(s).
B- passage au travers d'un conformateur chauffant porté entre 180 et 240°C donnant la forme de la section du profilé.

26. Utilisation d'une composition selon l'une quelconque des revendications 1 à 19 pour la fabrication d'objets, en particulier d'un objet recyclable.

27. Objet obtenu à partir d'une composition selon l'une quelconque des revendications 1 à 19, notamment par injection, extrusion, formage, calandrage, enroulement filamentaire ou pultrusion d'une telle composition.

28. Utilisation de l'objet selon la revendication 27 dans le domaine de l'automobile, du bâtiment, dans le domaine électrique ou électronique, ou dans le sport.

## Patentansprüche

1. Zusammensetzung auf der Basis von mindestens einem Polyamid mit mindestens einer MXD-Einheit, wobei MXD für meta-Xylylendiamin oder ein Gemisch von meta-Xylylendiamin und para-Xylylendiamin steht, und
einer Verstärkung biologischen Ursprungs im Sinne der Norm ASTM D6852.

2. Zusammensetzung nach Anspruch 1, **dadurch gekennzeichnet, dass** das Polyamid der Formel MXD.Z entspricht, wobei die Einheit Z eine aliphatische, cycloaliphatische oder aromatische C₄-C₃₆-Dicarbonsäure ist.

3. Zusammensetzung nach Anspruch 1, **dadurch gekennzeichnet, dass** das Polyamid ein Copolyamid ist, das der Formel A/MXD.Z entspricht, wobei die Einheit Z eine aliphatische, cycloaliphatische oder aromatische C₄-C₃₆-Dicarbonsäure ist und die Einheit A aus einem Lactam, einer α,ω-Aminocarbonsäure und dem Produkt der Umsetzung einer aliphatischen, cycloaliphatischen oder aromatischen C₄-C₃₆-Dicarbonsäure mit einem aliphatischen, cycloaliphatischen, arylaliphatischen oder aromatischen C₄-C₃₆-Diamin ausgewählt ist.

4. Zusammensetzung nach Anspruch 2 oder 3, **dadurch gekennzeichnet, dass** die Einheit Z eine aliphatische Dicarbonsäure ist, die mindestens 6, vorteilhafterweise 7 und stärker bevorzugt 10 Kohlenstoffatome umfasst.

5. Zusammensetzung nach Anspruch 3 oder 4, **dadurch gekennzeichnet, dass** die Einheit A ein Lactam oder eine α,ω-Aminocarbonsäure ist, das/die mindestens 6 und stärker bevorzugt mindestens 10 Kohlenstoffatome umfasst.

6. Zusammensetzung nach Anspruch 5, **dadurch gekennzeichnet, dass** die Einheit A aus Caprolactam, Lactam-12, 11-Aminoundecansäure und 12-Aminododecansäure ausgewählt ist.

7. Zusammensetzung nach Anspruch 3 oder 4, **dadurch gekennzeichnet, dass** die Einheit A das Kondensationsprodukt eines Diamins mit einer Dicarbonsäure ist, wobei das Diamin ein aromatisches Diamin, vorzugsweise meta-Xylylendiamin oder ein Gemisch von meta-Xylylendiamin und para-Xylylendiamin, ist.

8. Zusammensetzung nach einem der Ansprüche 3 bis 7, **dadurch gekennzeichnet, dass** der molare Anteil der Einheit MXD.Z im Copolyamid der Formel A/MXD.Z mehr als 25%, vorzugsweise mehr als 50% und stärker bevorzugt mehr als 65% beträgt.

9. Zusammensetzung nach einem der Ansprüche 1 bis 8, **dadurch gekennzeichnet, dass** die Verstärkung biologischen Ursprungs mindestens ein Element umfasst, das aus Pflanzenfasern, tierischen Fasern, Polymeren biologischen Ursprungs, Kohlenstofffasern und Kohlenstoffnanoröhrchen biologischen Ursprungs ausgewählt ist.

10. Zusammensetzung nach Anspruch 9, **dadurch gekennzeichnet, dass** die Pflanzenfaser aus Lein, Hanf, Sisal, Kenaf, Abaca und Jute ausgewählt ist.

11. Zusammensetzung nach einem der Ansprüche 1 bis 10, **dadurch gekennzeichnet, dass** die Verstärkung biologischen Ursprungs in Form eines Zerkleinerungsguts, eines Mehls, einer kurzen Faser, einer langen Faser, von gewebten Endlosfasern, von ungewebten Endlosfasern oder einer Matte aus gewebten oder ungewebten Fasern vorliegt.

12. Zusammensetzung nach einem der Ansprüche 1 bis 11, **dadurch gekennzeichnet, dass** sie außerdem mindestens eine zweite Verstärkung umfasst, die nicht biologischen Ursprungs ist, wobei die zweite Verstärkung eine Kohlenstofffaser, Kohlenstoffnanoröhrchen oder Glasfasern sein kann.

13. Zusammensetzung nach Anspruch 12, **dadurch gekennzeichnet, dass** das Massenverhältnis (Verstärkung biologischen Ursprungs) zu (zweite Verstärkung nicht biologischen Ursprungs) größer als 0,3, vorzugsweise größer als oder gleich 1 und insbesondere größer als oder gleich 3 ist.

14. Zusammensetzung nach einem der Ansprüche 1 bis 13, **dadurch gekennzeichnet, dass** der Gewichtsanteil der Verstärkung biologischen Ursprungs und gegebenenfalls der zweiten Verstärkung nicht biologischen Ursprungs zwischen 5 und 80%, vorteilhafterweise zwischen 10 und 70%, vorzugsweise zwischen 15 und 50% und noch stärker bevorzugt zwischen 15 und 40%, bezogen auf das Gesamtgewicht der Zusammensetzung, beträgt.

15. Zusammensetzung nach einem der Ansprüche 1 bis 14, **dadurch gekennzeichnet, dass** sie außerdem mindestens ein zweites Polyamid enthält.

16. Zusammensetzung nach Anspruch 15, **dadurch gekennzeichnet, dass** der Gewichtsanteil des zweiten Polyamids weniger als 50%, vorzugsweise weniger als 25% und ganz besonders weniger als 15% der Gesamtheit aller Polyamide ausmacht.

17. Zusammensetzung nach einem der Ansprüche 1 bis 16, **dadurch gekennzeichnet, dass** sie außerdem mindestens ein aus Schlagzähigkeitsmodifikatoren, Verarbeitungshilfsmitteln, UV-Stabilisatoren, Wärmestabilisatoren, Flammschutzmitteln ausgewähltes Additiv, vorzugsweise in einem Gewichtsanteil, der weniger als 50%, vorteilhafterweise weniger als 20%, bezogen auf das Gesamtgewicht der Zusammensetzung, ausmacht, umfasst.

18. Zusammensetzung nach einem der Ansprüche 1 bis 17, **dadurch gekennzeichnet, dass** sie außerdem Füllstoffe, wie Talk, Montmorillonit, Kreide, Glimmer und Kaolin, vorzugsweise in einem Gewichtsanteil, der weniger als 30% und insbesondere weniger als 20%, bezogen auf das Gesamtgewicht der Zusammensetzung, ausmacht, umfasst.

19. Zusammensetzung nach einem der Ansprüche 1 bis 18, **dadurch gekennzeichnet, dass** die Verstärkung biologischen Ursprungs und gegebenenfalls die zweite Verstärkung nicht biologischen Ursprungs einer Behandlung unterzogen wird/werden, die darauf abzielt, ihre Adhäsion in Bezug auf die Polyamide zu verbessern, wobei die Behandlung aus Folgenden ausgewählt ist:
- einer chemischen Behandlung,
- einer Vorumhüllung der Verstärkung mit einem polymeren Kupplungsmittel,
- einer Plasmabehandlung,
- einer mechanischen oder thermomechanischen Behandlung,
- einer Laserbehandlung,
- einer γ- oder UV-Bestrahlung.

20. Verfahren zur Herstellung eines Verbundwerkstoffs ausgehend von einer Zusammensetzung, die eine Verstärkung biologischen Ursprungs in Form kurzer Fasern nach einem der Ansprüche 11 bis 19 umfasst, wobei das Verfahren die folgenden Schritte umfasst:
A- Vermischen der Verstärkung biologischen Ursprungs und des/der Polyamid(s/e) in einer Strangpresse oder einem Co-Kneter zwischen 180 und 240°C,
B- Extrusion des Stabs,
C- Granulierung des Stabs.

21. Verfahren zur Herstellung eines Verbundwerkstoffs ausgehend von einer Zusammensetzung, die eine Verstärkung biologischen Ursprungs in Form langer Fasern nach einem der Ansprüche 11 bis 19 umfasst, wobei das Verfahren die folgenden Schritte umfasst:
A- Imprägnieren der Verstärkung biologischen Ursprungs in dem/den schmelzflüssigen Polyamid(en) zwischen 180 und 240°C mithilfe einer Kreuzkopf-Strangpresse,
B- Extrusion des Stabs,
C- Granulierung des Stabs.

22. Verfahren zur Herstellung eines Verbundwerkstoffs ausgehend von einer Zusammensetzung, die eine Verstärkung biologischen Ursprungs in Form von gewebten oder ungewebten Fasern nach einem der Ansprüche 11 bis 19 umfasst, wobei das Verfahren die folgenden Schritte umfasst:
A- abwechselnde Stapelung der Verstärkung biologischen Ursprungs und von Filmen des/der Polyamid(s/e) oder Laminierung mehrerer Schichten der Verstärkung biologischen Ursprungs abwechselnd mit einem Film des/der Polyamid(s/e),
B- Heißpressen zwischen 180 und 240°C.

23. Verfahren zur Herstellung eines Verbundwerkstoffs ausgehend von einer Zusammensetzung, die eine Verstärkung biologischen Ursprungs in Form von Endlosfasern nach einem der Ansprüche 11 bis 19 umfasst, wobei das Verfahren die folgenden Schritte umfasst:
A- Vorimprägnieren der Verstärkung biologischen Ursprungs in einem Wirbelbett von Polyamid(en) auf elektrostatische Weise und anschließendes Erhitzen in einem auf zwischen 200°C und 240°C erhitzten Trockenofen oder in dem/den schmelzflüssigen Polyamid(en),
B- Fadenwickeln,
C- Erhitzen in einem auf zwischen 180°C und 240°C erhitzten Trockenofen.

24. Verfahren zur Herstellung eines Verbundwerkstoffs ausgehend von einer Zusammensetzung, die eine Verstärkung biologischen Ursprungs in Form gewebter oder ungewebter Fasern nach einem der Ansprüche 11 bis 19 umfasst, wobei das Verfahren die folgenden Schritte umfasst:
A- Vorimprägnieren der Verstärkung biologischen Ursprungs,
B- Herstellung von Platten durch Heißpressen zwischen 180 und 240°C.

25. Verfahren zur Herstellung eines Verbundwerkstoffs ausgehend von einer Zusammensetzung, die eine Verstärkung biologischen Ursprungs in Form von Endlosfasern nach einem der Ansprüche 11 bis 19 umfasst, zur Herstellung von Profilen durch Pultrusion, wobei das Verfahren die folgenden Schritte umfasst:
A- Ziehen der Verstärkung biologischen Ursprungs und Durchlaufimprägnieren des/der schmelzflüssigen Polyamid(s/e) oder von Pulver von Polyamid(en) in einem Wirbelbett,
B- Hindurchleiten durch eine auf zwischen 180 und 240°C erhitzte, heizbare Formungsvorrichtung, wobei die Profilquerschnittsform erhalten wird.

26. Verwendung einer Zusammensetzung nach einem der Ansprüche 1 bis 19 zur Herstellung von Gegenständen, insbesondere eines wiederverwertbaren Gegenstands.

27. Gegenstand, der aus einer Zusammensetzung nach einem der Ansprüche 1 bis 19, insbesondere durch Spritzguss, Extrusion, Formen, Kalandrieren, Fadenwickeln oder Pultrusion einer solchen Zusammensetzung, erhalten wird.

28. Verwendung des Gegenstands nach Anspruch 27 auf dem Gebiet der Automobile, des Bauwesens, auf dem Elektro- oder Elektronikgebiet oder für den Sport.

## Claims

1. Composition based on at least one polyamide having at least one MXD entity, MXD denoting meta-xylylenediamine or a mixture of meta-xylylenediamine and of para-xylylenediamine, and on a biobased reinforcement within the meaning of standard ASTM D6852.

2. Composition according to Claim 1, **characterized in that** the polyamide corresponds to the formula MXD.Z, the Z entity being an aliphatic, cycloaliphatic or aromatic, C₄-C₃₆ dicarboxylic acid.

3. Composition according to Claim 1, **characterized in that** the polyamide is a copolyamide corresponding to the formula A/MXD.Z, the Z entity being an aliphatic, cycloaliphatic or aromatic, C₄-C₃₆ dicarboxylic acid, and the A entity being chosen from a lactam, an α,ω-aminocarboxylic acid and the product of the reaction of an aliphatic, cycloaliphatic or aromatic, C₄-C₃₆ dicarboxylic acid with an aliphatic, cycloaliphatic, arylaliphatic or aromatic, C₄-C₃₆ diamine.

4. Composition according to Claim 2 or 3, **characterized in that** the Z entity is an aliphatic dicarboxylic acid comprising at least 6, advantageously 7 and more preferentially 10 carbon atoms.

5. Composition according to Claim 3 or 4, **characterized in that** the A entity is a lactam or an α, ω-aminocarboxylic acid comprising at least 6, and more preferentially at least 10, carbon atoms.

6. Composition according to Claim 5, **characterized in that** the A entity is chosen from caprolactam, lactam 12, 11-aminoundecanoic acid and 12-aminododecanoic acid.

7. Composition according to Claim 3 or 4, **characterized in that**, the A entity being the product of condensation of a diamine with a dicarboxylic acid, said diamine is an aromatic diamine, preferably meta-xylylenediamine or a mixture of meta-xylylenediamine and of para-xylylenediamine.

8. Composition according to any one of Claims 3 to 7, **characterized in that** the molar proportion of the MXD.Z unit, in the copolyamide of formula A/MXD.Z, represents more than 25%, preferably more than 50% and more preferentially more than 65%.

9. Composition according to any one of Claims 1 to 8, **characterized in that** the biobased reinforcement comprises at least one element chosen from plant fibers, animal fibers, biobased polymers, biobased carbon fibers and biobased carbon nanotubes.

10. Composition according to Claim 9, **characterized in that** the plant fiber is chosen from flax, hemp, sisal, kenaf, abaca and jute.

11. Composition according to any one of Claims 1 to 10, **characterized in that** the biobased reinforcement is in the form of a ground material, a flour, a short fiber, a long fiber, woven continuous fibers, nonwoven continuous fibers, or a mat of woven or nonwoven fibers.

12. Composition according to any one of Claims 1 to 11, **characterized in that** it also comprises at least one second reinforcement which is not biobased, it being possible for said second reinforcement to be a carbon fiber, carbon nanotubes or glass fibers.

13. Composition according to Claim 12, **characterized in that** the (biobased reinforcement) to (non-biobased second reinforcement) mass ratio is greater than 0.3, preferably greater than or equal to 1, and more particularly greater than or equal to 3.

14. Composition according to any one of Claims 1 to 13, **characterized in that** the weight proportion of biobased reinforcement and, where appropriate, of non-biobased second reinforcement is between 5% and 80%, advantageously between 10% and 70%, preferably between 15% and 50%, and even more preferably between 15% and 40%, of the total weight of the composition.

15. Composition according to any one of Claims 1 to 14, **characterized in that** it also comprises at least one second polyamide.

16. Composition according to Claim 15, **characterized in that** the weight proportion of the second polyamide represents less than 50%, preferably less than 25%, and more particularly less than 15%, of all of the polyamides.

17. Composition according to any one of Claims 1 to 16, **characterized in that** it also comprises at least one additive chosen from impact modifiers, processing aids, UV-stabilizers, heat-stabilizers, fire-retardants, preferably in a weight proportion representing less than 50%, advantageously less than 20%, of the total weight of the composition.

18. Composition according to any one of Claims 1 to 17, **characterized in that** it also comprises fillers, such as talc, montmorillonite, chalk, mica and kaolin, preferably in a weight proportion representing less than 30%, and more particularly less than 20%, of the total weight of the composition.

19. Composition according to any one of claims 1 to 18, **characterized in that** the biobased reinforcement and, where appropriate, the non-biobased second reinforcement undergo a treatment aimed at improving their adhesion with respect to the polyamides, said treatment being chosen from:
- a chemical treatment,
- a precoating of the reinforcement with a polymeric coupling agent,
- a plasma treatment,
- a mechanical or thermomechanical treatment,
- a laser treatment,
- a γ- or UV-irradiation.

20. Method for producing a composite material from a composition comprising a biobased reinforcement in the form of short fibers according to any one of Claims 11 to 19, said method comprising the following steps:
A- compounding of the biobased reinforcement and of the polyamide(s) in an extruder or a co-kneader, between 180 and 240°C,
B- extrusion of the rod,
C- granulation of the rod.

21. Method for producing a composite material from a composition comprising a biobased reinforcement in the form of long fibers according to any one of Claims 11 to 19, said method comprising the following steps:
A- impregnation of the biobased reinforcement in the molten polyamide(s) between 180 and 240°C by means of a crosshead extruder,
B- extrusion of the rod,
C- granulation of the rod.

22. Method for producing a composite material from a composition comprising a biobased reinforcement in the form of woven or nonwoven fibers according to any one of Claims 11 to 19, said method comprising the following steps:
A- stacking of alternating biobased reinforcement and films of the polyamide(s), or rolling of biobased reinforcement multilayers alternating with a film of polyamide(s),
B- hot-pressing of between 180 and 240°C.

23. Method for producing a composite material from a composition comprising a biobased reinforcement in the form of continuous fibers according to any one of Claims 11 to 19, said method comprising the following steps:
A- preimpregnation of the biobased reinforcement in a fluidized bed of polyamide(s) by the electrostatic route and then heating in an oven brought to between 200°C and 240°C, or in the molten polyamide(s),
B- filament winding,
C- heating in an oven brought to between 180°C and 240°C.

24. Method for producing a composite material from a composition comprising a biobased reinforcement in the form of woven or nonwoven fibers according to any one of Claims 11 to 19, said method comprising the following steps:
A- preimpregnation of the biobased reinforcement,
B- production of sheets by hot-pressing of between 180 and 240°C.

25. Method for producing a composite material from a composition comprising a biobased reinforcement in the form of continuous fibers according to any one of Claims 11 to 19, for producing profiles by pultrusion, said method comprising the following steps:
A- drawing of the biobased reinforcement and continuous impregnation of the polyamide(s) in a molten state or in a fluidized bed of powder of polyamide(s),
B- passing through a heating fixture brought to between 180 and 240°C giving the shape of the cross section of the profile.

26. Use of a composition according to any one of Claims 1 to 19, for producing objects, in particular a recyclable object.

27. Object obtained from a composition according to any one of Claims 1 to 19, in particular by injection-molding, extrusion, forming, calendering, filament winding or pultrusion of such a composition.

28. Use of the object according to Claim 27 in the automotive field, the construction field, in the electrical or electronic field, or in the sporting goods field.
